# DEMANDE DE BREVET EUROPEEN

(11) **EP 2 413 579 A1**
(43) Date de publication de la demande: **01.02.2012**
(21) Numéro de dépôt: 11305987.7
(22) Date de dépôt: 28.07.2011
(51) Int. Cl.: H04M 1/725

(54) **Téléphone mobile comportant des moyens de mise en oeuvre d'une application de jeu lors de la restitution d'une plage sonore**

(30) Priorité: 29.07.2010 FR 1056258
(71) Demandeur: Myriad Group AG, 8001 Zürich (CH)
(72) Inventeur: Deyres, Arnaud, 73000 Chambery (FR)
(74) Mandataire: Blot, Philippe Robert Emile

(57) **Abrégé**

L'invention a pour objet un téléphone mobile, comportant :
- des moyens (36) de sélection d'un fichier son contenant une plage sonore et au moins un attribut propre à la plage sonore,
- des moyens (35, 22) de restitution sonore de la plage sonore contenue dans le fichier sélectionné,
- une interface homme/machine (40, 42) permettant la mise en oeuvre d'une application de jeu (37) de question/réponse sur ledit téléphone.

L'application de jeu (37) comporte un paramètre dont la valeur définit l'objet des questions ; et
- il comporte des moyens de mise en oeuvre de l'application de jeu (37) lors de la restitution de chaque plage sonore avec pour valeur du paramètre, un attribut de la plage sonore en cours de restitution.

## Description

La présente invention concerne un téléphone mobile du type comportant :
- des moyens de sélection d'un fichier son contenant une plage sonore et au moins un attribut propre à la plage sonore,
- des moyens de restitution sonore de la plage sonore contenue dans le fichier sélectionné,
- une interface homme/machine permettant la mise en oeuvre d'une application de jeu de question/réponse sur ledit téléphone.

Les téléphones mobiles comportent couramment une mémoire ou un support amovible dans lequel sont mémorisés des fichiers son et des moyens de restitution sonore de ces fichiers, permettant ainsi d'utiliser le téléphone comme un baladeur pour écouter des contenus musicaux choisis par l'utilisateur.

Ces fichiers son contiennent certains attributs tels que le nom de l'interprète, le nom de l'auteur, le titre du morceau, etc... et le téléphone est propre à afficher l'un ou plusieurs de ces attributs sur un écran pendant la restitution du fichier considéré.

L'information figurant sur l'écran est alors informative pour l'utilisateur mais celle-ci est statique et limitée.

L'invention a pour but de proposer un téléphone permettant d'augmenter l'intérêt de l'utilisateur lors de la restitution d'une plage musicale.

A cet effet, l'invention a pour objet un téléphone mobile caractérisé en ce que
- l'application de jeu comporte un paramètre dont la valeur définit l'objet des questions ; et
- il comporte des moyens de mise en oeuvre de l'application de jeu lors de la restitution de chaque plage sonore avec pour valeur du paramètre, un attribut de la plage sonore en cours de restitution.

Sur un mode particulier de réalisation, le téléphone comporte l'une ou plusieurs des caractéristiques suivantes :
- le téléphone mobile comporte :
   ■ des moyens d'interrogation d'un serveur distant associé à une base de données de questions, par transmission de l'attribut du fichier en cours de diffusion, et
   ■ des moyens de réception d'au moins une question correspondant à la valeur de l'attribut transmis ;
- l'application de jeu comprend des moyens pour mettre à disposition de l'utilisateur une question associée à l'attribut de la plage sonore, pendant la restitution de la plage sonore, de moyens pour recueillir une réponse à cette question par l'utilisateur et des moyens pour évaluer la pertinence de la réponse fournie par l'utilisateur ;
- l'application de jeu est propre, pendant la restitution de la plage sonore, à recueillir de l'utilisateur, au moins une question et au moins une réponse associée et à stocker la question et la réponse associée en association avec l'attribut de la plage sonore, en vue d'une utilisation ultérieure dans le jeu pendant la restitution d'une plage sonore associée à cet attribut ;
- l'attribut est une valeur comprise dans le groupe consistant en le nom de l'auteur de la plage sonore, le nom de l'interprète de la plage sonore, le titre de la plage sonore et le type de la plage sonore ; et
- le téléphone comporte des moyens de sauvegarde permanente des fichiers son dans le téléphone et en ce que les moyens de restitution sonore de la plage sonore sont propres à assurer la restitution des fichiers son sélectionnés contenus dans le téléphone.

L'invention a également pour objet une installation comportant :
- un téléphone tel que décrit ci-dessus, et
- un serveur distant propre à communiquer avec le téléphone mobile et comportant une base de données associant à des attributs de fichiers son des questions/réponses.

L'invention sera mieux comprise à la lecture de la description qui va suivre, donnée uniquement à titre d'exemple et faite en se référant aux dessins sur lesquels :
- la figure 1 est une vue schématique d'un réseau mettant en oeuvre un téléphone selon l'invention ;
- la figure 2 est une vue schématique du téléphone ;
- la figure 3 est un organigramme illustrant le procédé mis en oeuvre par le téléphone selon l'invention lors d'une phase de jeu ; et
- la figure 4 est un organigramme illustrant le procédé mis en oeuvre par le téléphone selon l'invention lors d'une phase de création d'un jeu.

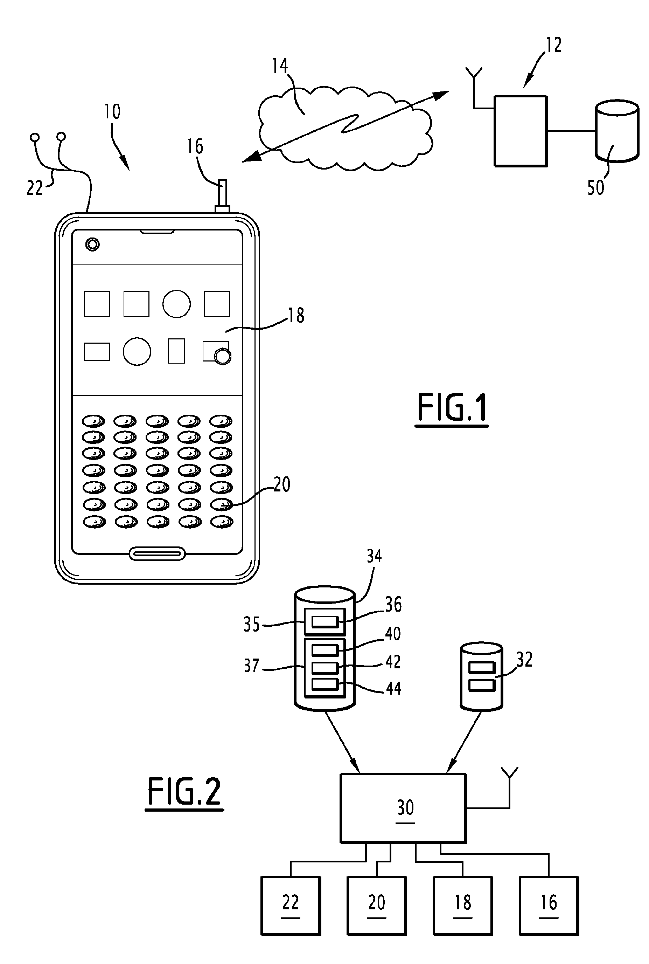

La figure 1 illustre un téléphone mobile 10 connecté à un serveur 12 d'un réseau 14 sans fil par exemple le réseau 3G.

Comme connu en soi, le téléphone comporte des moyens 16 d'émission et de réception de données au travers du réseau, un écran 18 d'affichage d'informations et un clavier 20, pouvant être intégré dans un écran tactile. Il comporte en outre des oreillettes associées à un amplificateur 22 ou tout autre équipement propre à la production de sons.

Comme détaillé sur la figure 2, le téléphone comporte un processeur 30, assurant la gestion du téléphone et des différents modules fonctionnels décrits ci-dessus. Ce processeur est associé à différents stockages de données dont un premier noté 32 contient des fichiers son présent localement dans le téléphone.

Chaque fichier son comporte, outre une partie propre au son lui-même, des attributs propres au fichier et notamment le nom de l'auteur de la plage sonore, le nom de l'interprète de la plage sonore, le titre de la plage sonore et le type de la plage sonore.

Un second stockage 34 contient les applications du téléphone, à savoir des programmes qui permettent le fonctionnement du téléphone. Parmi ceux-ci figure une application 35 de lecture des fichiers son permettant la restriction sonore des fichiers depuis les oreillettes 22. Cette application comporte notamment des moyens 36 de sélection d'un fichier dont la restitution est souhaitée.

Ce stockage contient en outre une application de jeu 37 permettant, lors de reproduction d'un fichier son, suivant un mode « réponse à des questions », la mise à disposition de questions en relation avec au moins un attribut du fichier son ou suivant le mode « création de questions », la saisie de question et de propositions de réponse par l'utilisateur en relation avec au moins un attribut du fichier son.

A cet effet, l'application comporte un paramètre correspondant à l'objet des questions. Lors du lancement de l'application, ce paramètre est renseigné avec un attribut du fichier en cours de lecture.

L'application comporte un moyen 40 d'affichage d'une question à l'écran, un moyen 42 de saisie d'une réponse à la question depuis le clavier 20 et notamment un moyen permettant la sélection d'une réponse parmi plusieurs réponses proposées, ainsi que des moyens 44 d'interrogation et d'échange d'informations avec le serveur 12 au travers des moyens d'émission et de réception 16.

Le serveur distant 12 est associé à une base de données 50 comportant une association entre des attributs mémorisés et des questions, elles mêmes associées à au moins une bonne réponse et éventuellement un ou plusieurs réponses fausses.

Ainsi par exemple, il contient pour le nom de l'interprète X en tant que attribut, une question « A quel âge X s'est il marié ? », une réponse correcte « 26 ans » et 3 réponses fausses par exemple « 24 ans », « 28 ans » et « 30 ans ».

Le serveur 12 comporte des moyens de communication avec l'application de jeu fonctionnant sur le téléphone et est propre à fournir des résultats à l'application 37 ou à recevoir des questions/réponses issues de l'application 37.

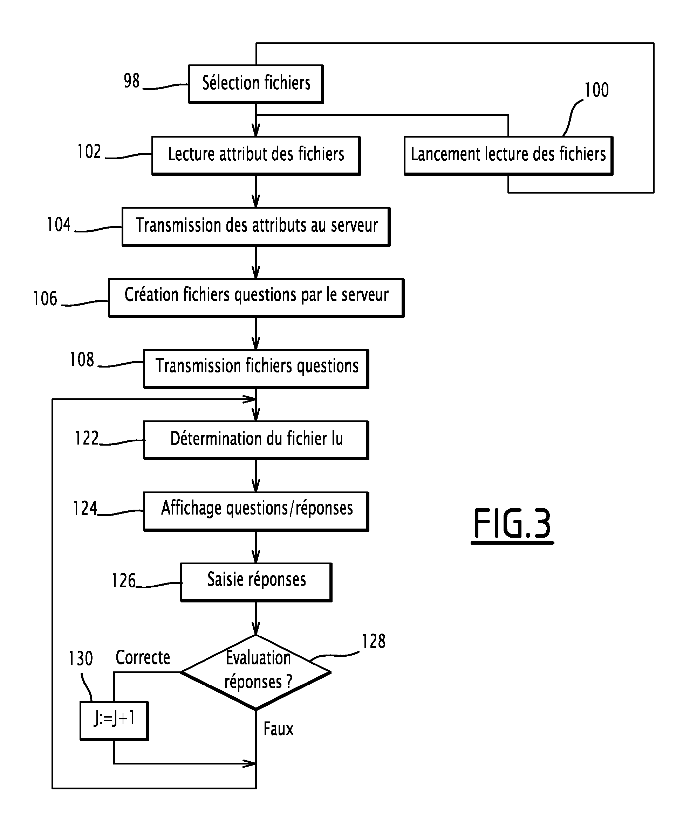

L'algorithme de la figure 3 illustre le procédé mis à en oeuvre selon l'invention par le calculateur 30 sous la commande du programme

Alors que l'application de jeu est lancée en mode « réponse à des questions », à l'étape 98, un ou plusieurs fichiers son dont la lecture est souhaitée sont sélectionnés depuis les moyens de sélection 36. Le lancement de la restitution des fichiers son est effectuée à l'étape 100 par l'application de lecture 35.

A l'étape 102, un attribut de chaque fichier son par exemple le nom des interprètes est lu.

Ces attributs sont communiqués au serveur 12 au travers du réseau, à l'étape 104, après quoi le serveur définit à partir des données contenues dans la base de données 50, et pour chaque attribut, un fichier questions contenant, plusieurs questions, par exemple 4, chacune associée à l'attribut, et pour chaque question une réponse correcte et 3 réponses fausses à l'étape 106. Ces fichiers sont transmis au téléphone à l'étape 108 au travers du réseau et sont mémorisés temporairement dans le téléphone.

Un test est effectué pour déterminer le fichier est en cours de lecture à l'étape 122 et une première question figurant dans le fichier reçu associé à l'attribut du fichier en cours de lecture est affichée à l'écran ainsi que les 3 réponses fausses et la réponse correcte associé, à l'étape 124.

L'utilisateur est invité à choisir l'une des réponses à l'étape 126. Sa réponse est évaluée à l'étape 128 et si sa réponse est correcte, un compteur J de points est incrémenté à l'étape 130. Les valeurs du compteur J sont stockées, suivant un premier mode de réalisation, dans le téléphone. Suivant une variante, ces valeurs sont envoyées au serveur distant 12 et mémorisées pour chaque participant du jeu. Le serveur comporte des moyens pour effectuer un classement entre les participants sur la base de leurs compteurs respectifs.

Les étapes 112 et suivantes sont alors remises en oeuvre, et de nouvelles questions associée à l'attribut du fichier en cours de lecture sont posées à l'utilisateur, tant que la restitution du fichier son se poursuit et que le nombre de questions contenues dans le fichier questions n'est pas atteint.

Lors de la sélection d'un nouveau fichier son, les mêmes étapes sont mises en oeuvre.

On conçoit qu'un tel agencement permet d'animer le téléphone pendant la diffusion d'un fichier son en proposant des questions ayant trait à un attribut du fichier son.

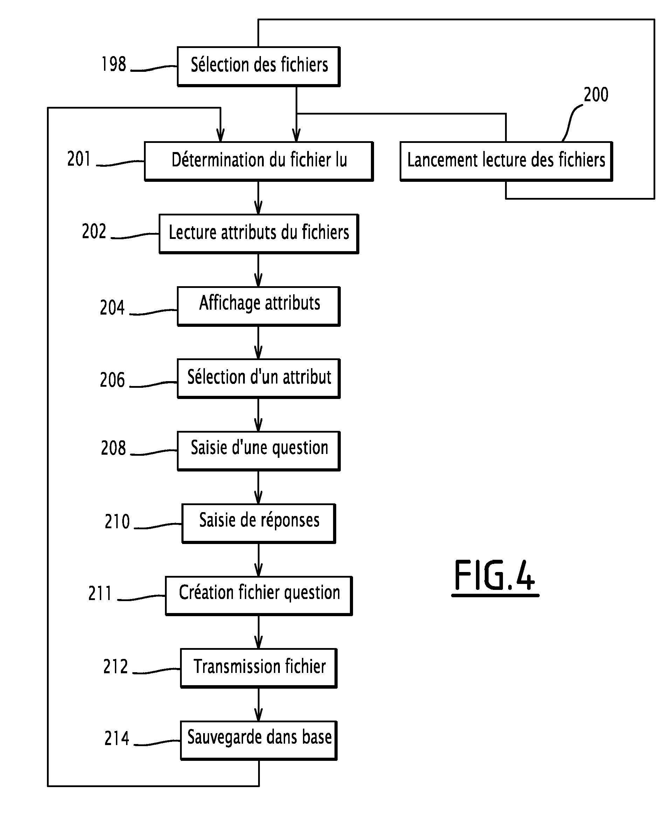

Suivant un autre mode, illustré sur la figure 4, l'utilisateur est invité, non pas à répondre à des questions mais à proposer des questions et des réponses en relation avec l'un des attributs du fichier son en cours de lecture pour enrichir la base de données 50.

A cet effet, l'application de jeu est propre à mettre en l'oeuvre l'algorithme de la figure 4 après sélection du mode « création de questions ».

Les fichiers dont la lecture est souhaitée sont d'abord sélectionnés à l'étape 198 et la lecture des fichiers son est initiée à l'étape 200.

L'application de jeu 37 détecte d'abord le fichier en cours de lecture à l'étape 201 puis à l'étape 202 les attributs du fichier en cours de lecture. Elle les affiche alors à l'étape 204 sur l'écran.

L'utilisateur est invité par une interface graphique adaptée à sélectionner l'un de ces attributs à l'étape 206 puis à rédiger une question associé à cet attribut à l'étape 208. L'application invite ensuite l'utilisateur, à l'étape 210, à saisir 4 réponses dont seule l'une est correcte pour la question précédemment saisie et à identifier la réponse correcte.

L'attribut, la question et la réponse correcte et les 3 réponses fausses sont intégrés dans un fichier question à l'étape 211 et ce fichier est transmis, à l'étape 212 par le téléphone 10 au serveur 12, lequel assure le stockage des données reçues dans la base 50 à l'étape 214.

Ces dernières données sont alors disponibles pour être transmises vers un autre téléphone mettant en oeuvre l'application de jeu lors de la détection de l'attribut considéré dans un fichier son lu.

En variante, les données stockées sont validées par un modérateur depuis le serveur 12 avant d'être mises à disposition dans la base 50.

## Revendications

1. Téléphone mobile, comportant :
- des moyens (36) de sélection d'un fichier son contenant une plage sonore et au moins un attribut propre à la plage sonore,
- des moyens (35, 22) de restitution sonore de la plage sonore contenue dans le fichier sélectionné,
- une interface homme/machine (40, 42) permettant la mise en oeuvre d'une application de jeu (37) de question/réponse sur ledit téléphone,
**caractérisé en ce que**
- l'application de jeu (37) comporte un paramètre dont la valeur définit l'objet des questions ; et
- il comporte des moyens de mise en oeuvre de l'application de jeu (37) lors de la restitution de chaque plage sonore avec pour valeur du paramètre, un attribut de la plage sonore en cours de restitution.

2. Téléphone mobile selon la revendication 1, **caractérisé en ce qu'**il comporte :
- des moyens d'interrogation (44) d'un serveur distant associé à une base de données de questions (50), par transmission de l'attribut du fichier en cours de diffusion, et
- des moyens de réception (44) d'au moins une question correspondant à la valeur de l'attribut transmis.

3. Téléphone mobile selon la revendication 1 ou 2, **caractérisé en ce que** l'application de jeu (37) comprend des moyens (40) pour mettre à disposition de l'utilisateur une question associée à l'attribut de la plage sonore, pendant la restitution de la plage sonore, de moyens (42) pour recueillir une réponse à cette question par l'utilisateur et des moyens pour évaluer (128) la pertinence de la réponse fournie par l'utilisateur.

4. Téléphone mobile selon l'une quelconque des revendications précédentes, **caractérisé en ce que** l'application de jeu (37) est propre, pendant la restitution de la plage sonore, à recueillir (208) de l'utilisateur, au moins une question et au moins une réponse associée et à stocker (211) la question et la réponse associée en association avec l'attribut de la plage sonore, en vue d'une utilisation ultérieure dans le jeu pendant la restitution d'une plage sonore associée à cet attribut.

5. Téléphone mobile selon l'une quelconque des revendications précédentes, **caractérisé en ce que** l'attribut est une valeur comprise dans le groupe consistant en le nom de l'auteur de la plage sonore, le nom de l'interprète de la plage sonore, le titre de la plage sonore et le type de la plage sonore.

6. Téléphone mobile selon l'une quelconque des revendications précédentes, caractérisé en qu'il comporte des moyens de sauvegarde permanente des fichiers son dans le téléphone et en ce que les moyens (35, 22) de restitution sonore de la plage sonore sont propres à assurer la restitution des fichiers son sélectionnés contenus dans le téléphone.

7. Installation comportant :
- un téléphone (10) selon l'une quelconque des revendications précédentes
- un serveur distant (12) propre à communiquer avec le téléphone mobile et comportant une base de données (50) associant à des attributs de fichiers son des questions/réponses.
